# EUROPÄISCHE PATENTSCHRIFT

(11) **EP 4 512 675 B1**
(45) Veröffentlichungstag und Bekanntmachung des Hinweises auf die Patenterteilung: **19.11.2025**
(21) Anmeldenummer: 24192602.1
(22) Anmeldetag: 02.08.2024
(51) Int. Cl.: B60T 13/08

(54) **AUFLAUFEINRICHTUNG FÜR EINEN ANHÄNGER**
OVERRUN DEVICE FOR A TRAILER
DISPOSITIF D'INERTIE POUR UNE REMORQUE

(30) Priorität: 24.08.2023 DE 202023104811 U
(43) Veröffentlichungstag der Anmeldung: 26.02.2025
(73) Patentinhaber: Knott GmbH, D-83125 Eggstätt (DE)
(72) Erfinder: Strasser, Josef, 83257 Gstadt (DE)
(74) Vertreter: Flach Bauer & Partner Patentanwälte mbB

(56) Entgegenhaltungen:
- EP-B1- 3 656 619
- WO-A1-2022/131937
- DE-U1- 202019 104 843

## Beschreibung

### Gebiet der Erfindung

Die vorliegende Erfindung betrifft eine Auflaufeinrichtung für einen Anhänger sowie einen Anhänger mit einer solchen Auflaufeinrichtung.

### Hintergrund

Auflaufeinrichtungen für Anhänger sind grundsätzlich bekannt. Eine Auflaufreinrichtung ist typischerweise eine mechanische Baugruppe, die bei Anhängern verwendet wird, um den Anhänger zu bremsen, wenn das Zugfahrzeug verzögert. Insbesondere ermöglicht eine Auflaufeinrichtung, den Anhänger synchron mit dem Zugfahrzeug zu bremsen. Bekannte Auflaufeinrichtungen erhöhen die Stabilität des Anhängers beim Fahren und somit die Sicherheit. Insbesondere kann Schlingern und/oder anders unkontrolliertes Verhalten des Anhängers verhindert werden. DE202019104843 A1 zeigt eine konventionelle Auflaufbremskupplung, wo die Sicherungselemente befestigt am Lagergehäuse.

Auflaufeinrichtungen kommen insbesondere bei Kraftfahrzeuganhängern, wie PKW-Anhängern (z.B. Wohnwägen, Pferdetransporter, Lastanhänger und dergleichen), landwirtschaftlichen Anhängern und/oder LKW-Anhängern, zum Einsatz.

Bei Auflaufeinrichtungen handelt es sich in mehrfacher Hinsicht um sicherheitsrelevante Baugruppen. Zum einen wird, wie oben beschrieben, mittels der Auflaufeinrichtung die Bremsung des Anhängers gesteuert. Eine nicht korrekte Funktionsweise der Auflaufeinrichtung kann somit die Bremsung des Anhängers beeinträchtigen oder sogar unmöglich machen. Zum anderen bildet die Auflaufeinrichtung typischerweise ein Verbindungselement, das den Anhänger mit dem Zugfahrzeug verbindet. Kommt es zu einem Versagen der Auflaufeinrichtung (beispielsweise Bruch) kann die Verbindung zwischen Zugfahrzeug und Anhänger getrennt werden. Die unkontrollierte Trennung von Zugfahrzeug und Anhänger führt nicht nur zu einer Beschädigung des Anhängers und/oder des Zugfahrzeugs, sondern stellt auch eine hohe Gefahr für andere Verkehrsteilnehmer dar.

Mithin sind an die Zuverlässigkeit der Auflaufeinrichtung hohe Anforderungen zu stellen. Unteranderem muss die Auflaufeinrichtung für die Zuglast des Anhängers und des Zugfahrzeugs ausgelegt sein. Zudem ist es teilweise Vorschrift, dass die Auflaufeinrichtung einen Not-Bremsmechanismus aufweist oder einen Not-Bremsmechanismus des Anhängers auslösen kann, wenn sich der Anhänger von dem Kraftfahrzeug löst. Weiterhin werden an die Festigkeit bzw. die Belastbarkeit der verwendeten Werkstoffe hohe Anforderungen gestellt. Beispielsweise schreibt die Regelung Nr. 55 der Wirtschaftskommission der Vereinten Nationen für Europa (UN/ECE) vom 28.8.2010 vor, dass sämtliche Einzelteile deren Versagen eine Trennung von Fahrzeug und Anhänger bewirken kann, aus Stahl hergestellt sein müssen.

Diese hohen Anforderungen führen dazu, dass bekannte Auflaufeinrichtungen sehr massiv und aus Stahl ausgeführt werden. Die massive Bauart führt jedoch dazu, dass das Gewicht der Auflaufeinrichtung sehr hoch ist, sodass die Nutzlast des Anhängers entsprechend herabgesetzt ist.

### Beschreibung der Erfindung

Es ist daher die Aufgabe der vorliegenden Erfindung eine Auflaufeinrichtung für einen Anhänger sowie einen Anhänger mit einer solchen Auflaufeinrichtung bereitzustellen, mit der die vorgenannten Nachteile jedenfalls teilweise überwunden werden können. Insbesondere soll die Auflaufeinrichtung ein geringes Gewicht aufweisen und zudem eine sichere Verbindung zwischen dem Anhänger und einem Zugfahrzeug gewährleisten.

Diese Aufgabe wird durch eine Auflaufeinrichtung gemäß Anspruch 1 und durch einen Anhänger gemäß Anspruch 14 gelöst. Weitere Aspekte der Erfindung sind in den Unteransprüchen sowie der nachfolgenden Beschreibung angeführt.

Insbesondere wir die Aufgabe durch eine Auflaufeinrichtung für einen Anhänger gelöst, wobei die Auflaufeinrichtung eine Zugstange, zumindest ein Sicherungselement und ein Lagergehäuse umfasst. Die Zugstange weist ein erstes Ende auf, welches in Vorwärtsfahrrichtung weist. An diesem ersten Ende ist die Zugstange mit einem Zugfahrzeug koppelbar. Das Koppeln kann über eine Kugelkopfkupplung (d.h. eine klassische KFZ-Anhängerkupplung) erfolgen, oder über jede bekannte Anhängerkupplungsart, wie beispielsweise eine Maulkupplung. Entsprechend können an der Zugstange ein Kopplungselement (z.B. eine Kugelkupplungselement, eine Aufnahme für einen Bolzen einer Maulkupplung und/oder dergleichen) zum Koppeln mit einem Zugfahrzeug vorgesehen sein.

Das Lagergehäuse ist ein Leichtmetallgehäuse, ein Kunststoffgehäuse oder ein Verbundwerkstoffgehäuse und die Zugstange ist in dem Lagergehäuse translatorisch verschiebbar gelagert. Zudem ist die Zugstange dazu eingerichtet, eine Bremse des Anhängers zu betätigen, wenn die Zugstange relativ zum Lagergehäuse entgegen der Vorwärts-Fahrtrichtung verschoben wird. Die Zugstange dient mithin dem Bremsen des Anhängers, wenn dieser auf sein Zugfahrzeug aufläuft, wie dies beispielsweise beim Bremsen des Zugfahrzeugs oder bei einer Bergabfahrt der Fall sein kann.

Das Sicherungselement ist vom Lagergehäuse verschieden und dazu eingerichtet fest mit dem Anhänger verbunden zu werden. Durch die Verbindung zwischen Anhänger und Sicherungselement kann der Bereich des Anhängers mit dem das Sicherungselement verbunden ist zusätzlich stabilisiert werden, sodass höhere Biegelasten und/oder Drehmomente (insbesondere solche, die zu einer Verwindung führen) aufgenommen werden können.

Zudem weist das Sicherungselement einen Anschlag auf, welcher die Bewegung der Zugstange relativ zum Lagergehäuse in Vorwärts-Fahrtrichtung begrenzt. In anderen Worten verhindert das Sicherungselement, dass die Zugstange von dem Anhänger abgezogen werden kann. Da die Zugstange mit dem Fahrzeug gekoppelt ist und zudem am Anhänger gesichert ist, kann effektiv verhindert werden, dass sich der Anhänger vom Fahrzeug trennt, auch wenn beispielsweise das Lagergehäuse bricht. Diese Konstruktion erlaubt es, das Lagergehäuse in Leichtbauweise (d.h. als Leichtmetallgehäuse, als Kunststoffgehäuse oder als Verbundwerkstoffgehäuse) auszubilden, da es aufgrund des Sicherungselements kein versagensrelevantes Bauteil ist. Das Sicherungselement und die Zugstange können aus Stahl oder im Wesentlichen aus Stahl bestehen. Diese Leichtbauweise erlaubt es das Gewicht der Auflaufeinrichtung insgesamt zu reduzieren und so die Nutzlast eines entsprechenden Anhängers zu steigern.

Das Sicherungselement kann eine Durchgangsöffnung umfassen, durch die die Zugstange hindurchgeführt ist. Ein umlaufender Rand der Durchgangsöffnung umgreift die Zugstange mithin vollständig. Alternativ oder zusätzlich kann das Sicherungselement einen Rücksprung umfassen, der die Zugstange jedenfalls teilweise umgreift. Beispielsweise kann das Sicherungselement als Sicherungsbügel ausgeführt sein, der über die Zugstange gelegt und an dem Anhänger mittelbar oder unmittelbar befestigt wird. Das Sicherungselement kann angeschraubt, angeschweißt, genietet und/oder in sonstiger Weise befestigt werden. Somit kann der Bereich des Anhängers an dem das Sicherungselement befestigt ist zusätzlich stabilisiert werden. Mithin können höhere Biegelasten und/oder Drehmomente (insbesondere solche, die zu einer Verwindung führen) aufgenommen werden.

Ist das Sicherungselement als Sicherungsbügel ausgeführt, umgreift der Sicherungsbügel die Zugstange radial, wobei vorzugsweise zumindest 180° der Mantelfläche der Zugstange umgriffen sind.

Alternativ oder zusätzlich kann das Sicherungselement einen Vorsprung umfassen. Der Vorsprung kann in einen entsprechenden Rücksprung der Zugstange eingreifen. Beispielsweise kann die Zugstange ein Langloch oder eine Längsnut aufweisen, in den der Vorsprung des Sicherungselements (beispielsweise ein Bolzen) eingreift. Der Vorsprung und/oder Rücksprung können den Anschlag umfassen.

Die Zugstange kann einen Flanschabschnitt aufweisen. Der Flanschabschnitt kann integral mit der Zugstange ausgebildet sein, oder an einem Abschnitt der Zugstange befestigt sein. Insbesondere kann der Flanschabschnitt an einem zweiten Ende der Zugstange angeordnet sein, oder dieses bilden, wobei das zweite Ende dem ersten Ende gegenüberliegt. Der Flanschabschnitt ist dazu eingerichtet an dem Anschlag des Sicherungselements anzuschlagen, um die maximale Verschiebung der Zugstange relativ zum Lagergehäuse in Vorwärts-Fahrtrichtung zu begrenzen. Das Zusammenwirken von Flansch und Anschlag verhindert effektiv, dass die Zugstange vom Anhänger getrennt wird. Somit kann eine hohe Betriebssicherheit erzielt werden.

In einem weiteren Aspekt der Erfindung umfasst die Auflaufeinrichtung ein Gehäuse. Das Gehäuse ist dazu eingerichtet, mit dem Anhänger, insbesondere mit zumindest ein Zugholm des Anhängers verbunden zu werden. Das Gehäuse ist zudem unmittelbar mit dem Sicherungselement verbunden. Aufgrund der unmittelbaren Verbindung kann das Sicherungselement das Gehäuse, insbesondere mit dem Sicherungselement verbundene Gehäuseteile, vor Verbiegen und/oder Verwinden schützen. Vom Gehäuse können also höhere Biegelasten und/oder Drehmomente aufgenommen werden.

Weiterhin schützt das Gehäuse die Auflaufeinrichtung, insbesondere die beweglichen Komponenten der Auflaufeinrichtung, wie die Zugstange und das Lagergehäuse vor dem Eindringen von Schmutz. Zudem können die beweglichen Komponenten vor mechanischen Einflüssen, wie Schlagbelastungen, geschützt werden. Somit kann eine sehr beständige Ablaufeinrichtung bestellt werden.

Der Anhänger kann einen oder mehrere Zugholme aufweisen. An dem einen oder den mehreren zu Zugholmen kann die Auflaufeinrichtung insbesondere mittels ihres Gehäuses befestigt sein.

In einem weiteren Aspekt kann die Auflaufeinrichtung ein Gehäuse umfassen, welches zumindest zwei Gehäuseteile umfasst. Die zumindest zwei Gehäuseteile sind dazu eingerechnet, mit dem Anhänger, insbesondere mit zumindest einem Zugholm des Anhängers verbunden zu werden. Die zumindest zwei Gehäuseteile werden weiterhin unmittelbar mit dem Sicherungselement verbunden. So kann eine sehr gute Verbindung zwischen dem Anhänger (insbesondere den Zugholmen) und dem Gehäuse der Auflaufeinrichtung bereitgestellt werden. Weiterhin führt die Verbindung zwischen den Gehäuseteilen und dem Sicherungselement dazu, dass das Sicherungselement die Gehäuseteile stabilisiert, sodass von den Gehäuseteilen höhere Biegelasten und/oder Drehmomente aufgenommen werden können.

Weiterhin kann das zumindest eine Sicherungselement zumindest ein Rastelement umfassen. Dieses Rastelement kann formschlüssig mit dem Anhänger und/oder mit einem Gehäuseteil des Gehäuses der Auflaufeinrichtung zusammengreifen.

Das Gehäuseteil der Auflaufeinrichtung oder der Anhänger können ein komplementäres Rastelement aufweisen. Dieses komplementäre Rastelement kann mit dem zumindest einen Rastelement zusammengreifen. So kann das Sicherungselement formschlüssig mit dem Anhänger (mittelbar oder unmittelbar) verbunden werden.

Die formschlüssige Verbindung kann die alleinige Verbindung sein, oder es können weitere, zusätzliche Verbindungsarten (wie Schrauben, Nieten, Schweißen, und/oder dergleichen) bereitgestellt werden. Somit kann eine sehr sichere Verbindung zwischen dem Sicherungselement der Auflaufeinrichtung und dem Anhänger bereitgestellt werden. Dies führt auch zu einer Verbesserung der Sicherheit der Verbindung zwischen Zugstange und Anhänger. Zudem können durch diese formschlüssige Verbindung höhere Biegelasten und/oder Drehmomente aufgenommen werden.

In einem weiteren Aspekt kann sich das zumindest eine Rastelement in eine laterale Richtung (d.h. eine Richtung, die im Wesentlichen senkrecht zur Vorwärtsfahrrichtung ist) erstrecken. Ein Gehäuseteil des Gehäuses der Auflaufeinrichtung kann ein komplementäres Rastelement umfassen, auf das das Rastelement aufgeschoben wird, um das Sicherungselement am Anhänger zu befestigen.

Wenn sich das Rastelement in die laterale Richtung erstreckt und das Gehäuseteil mit seinem komplementären Rastelement entgegen der lateralen Richtung auf das Rastelement aufgeschoben wird, kann sich das Sicherungselement und das Gehäuseteil nicht aufgrund einer Zugkraft in Vorwärts-Fahrtrichtung oder entgegen Vorwärts-Fahrtrichtung lösen. Somit kann eine sichere Verbindung hergestellt werden. Zudem stabilisieren die Rastelemente das/die entsprechenden Gehäuseteil(e), sodass das/die Gehäuseteil(e) höhere Biegelasten und/oder Drehmomente aufnehmen können.

Weiterhin kann die Auflaufeinrichtung eine Abdeckung umfassen. Diese Abdeckung kann das Lagergehäuse und die Zugstange jedenfalls teilweise abdecken. Beispielsweise kann die Abdeckung von oben auf das Gehäuse/die Gehäuseteile des Gehäuses der Auflaufeinrichtung aufgesetzt sein und an diesen befestigt werden. Als Befestigung können Schrauben, Rasthaken, Klebstoffe und/oder dergleichen benutzt werden. Die Abdeckung verhindert, dass ein Benutzer des Anhängers an die beweglichen Teile, insbesondere die Zugstange greifen kann. Somit ist er vor Klemmungen und Quetschungen geschützt. Die Öffnungen zwischen der Abdeckung und den übrigen Teilen der Auflaufeinrichtung können so bemessen sein, dass ein Benutzer nicht hineingreifen kann. Die Öffnungen sind mithin kleiner als der Durchmesser eines Fingers eines Benutzers. Zudem schützt die Abdeckung die übrigen Teile der Auflaufeinrichtung vor Witterungseinflüssen.

Die Auflaufeinrichtung kann weiterhin ein Dämpfungselement umfassen. Dieses Dämpfungselement kann insbesondere zwischen dem Anschlag und der Zugstange angeordnet sein. In einem Aspekt ist das Dämpfungselement zwischen dem Anschlag und dem Flanschabschnitt der Zugstange angeordnet. Das Dämpfungselement kann ein elastisches Dämpfungselement, wie beispielsweise ein Gummi-Dämpfungselement, oder ein Silikon- Dämpfungselement sein. Andere Materialien sind ebenso möglich. Zudem kann das Dämpfungselement im Wesentlichen Ringförmig ausgebildet sein. Andere Formen sind auch möglich.

Ist das Dämpfungselement zwischen dem Anschlag und der Zugstange angeordnet, können bei der Fahrt des Anhängers Stöße, die von der Fahrt herrühren, d.h. vom Zugfahrzeug oder vom Anhänger von der Straße auf die Zugstange bzw. die Auflaufeinrichtung übertragen werden, abgemildert werden. Somit kann eine langlebige Auflaufeinrichtung bereitgestellt werden. Insbesondere kann das Dämpfungselement verhindern, dass es zu einem Abrieb zwischen Anschlag und Zugstange bzw. deren Flanschabschnitt kommt.

Die Auflaufeinrichtung kann zudem ein Feder- und/oder Dämpfungselement aufweisen. Beispielsweise kann ein Feder- und/oder Dämpfungselement jedenfalls teilweise innerhalb der Zugstange angeordnet sein und eine Bewegung der Zugstange entgegen der Vorwärts-Fahrtrichtung dämpfen und/oder die Zugstange in eine Richtung entgegen der Vorwärts-Fahrtrichtung vorspannend. Das Vorspannen bewirkt, dass die Zugstange in einer Normalstellung (beispielsweise wenn der Anhänger nicht angekoppelt ist) in Fahrtrichtung maximal ausgelenkt ist.

Die Auflaufeinrichtung kann zudem ein weiteres Sicherungselement umfassen. Dieses weitere Sicherungselement ist dazu eingerichtet, fest mit dem Anhänger verbunden zu werden. Durch die Verbindung zwischen dem Anhänger und dem weiteren Sicherungselement kann der Bereich des Anhängers mit dem das weitere Sicherungselement verbunden ist zusätzlich stabilisiert werden, sodass noch höhere Biegelasten und/oder Drehmomente (insbesondere solche, die zu einer Verwindung führen) aufgenommen werden können.

Die Verbindung kann über Schrauben, Nieten, Verschweißen und/oder dergleichen erfolgen. Die Befestigung kann dabei unmittelbar oder mittelbar sein. Das weitere Sicherungselement ist zudem dazu eingerichtet, die Zugstange am Anhänger zu sichern, wenn das erste Sicherungselement versagt.

Beispielsweise kann das erste Sicherungselement einen Rücksprung aufweisen, der die Zugstange zumindest teilweise übergreift (also beispielsweise als Sicherungsbügel ausgeführt sein). Alternativ oder zusätzlich kann das weitere Sicherungselement einen Vorsprung aufweisen, der in die Zugstange eingreift. Hierzu kann die Zugstange einen Rücksprung, wie eine Längsnut oder ein Langloch aufweisen. In diesen Rücksprung greift der Vorsprung des weiteren Sicherungselements ein und sichert die Zugstange somit zusätzlich.

Beispielsweise kann das Lagergehäuse ein erstes Ende und ein zweites Ende aufweisen, wobei das erste Ende in Vorwärts-Fahrtrichtung weist, und das zweite Ende dem ersten Ende in gegenüberliegt. Das Sicherungselement kann beispielsweise am zweiten Ende oder in der Nähe des zweiten Endes des Lagergehäuses angeordnet sein. Das optionale weitere Sicherungselement kann beispielsweise am ersten Ende oder in der Nähe des ersten Endes angeordnet sein.

Somit ist das Lagergehäuse beispielsweise im Wesentlichen zwischen dem ersten und dem zweiten Sicherungselement angeordnet. In einem weiteren Aspekt können die Sicherungselemente oder zumindest ein Sicherungselement, das Lagergehäuse umgreifen. Zudem kann zumindest ein Sicherungselement dazu dienen, das Lagergehäuse zu befestigen. Das Lagergehäuse kann beispielsweise zwischen den Sicherungselementen geklemmt sein, durch zumindest ein Sicherungselement formschlüssig gehalten werden und/oder an zumindest einem Sicherungselement befestigt sein. Die Befestigung kann beispielsweise durch Klebstoff, durch Nieten oder durch Schrauben erfolgen.

Weiterhin kann das Lagergehäuse an einem Gehäuseteil der Auflaufeinrichtung befestigt sein, beispielsweise durch Nieten, Schrauben und/oder dergleichen.

In einem Aspekt weist das Lagergehäuse lateral orientierte Durchgangsbohrungen auf. Diese können Schrauben und/oder Gewindebolzen aufnehmen so das Lagergehäuse (mittelbar oder unmittelbar) mit dem Anhänger, insbesondere einem Zugholm des Anhängers verbinden.

In einem weiteren Aspekt ist zwischen dem Lagergehäuse und dem Sicherungselement und optional zwischen dem Lagergehäuse und dem weiteren Sicherungselement ein Dichtungselement angeordnet. Das Dichtungselement kann verhindern, dass Schmutz und/oder Feuchtigkeit in das Lagergehäuse eindringt.

In einem weiteren Aspekt umfasst die Auflaufeinrichtung einen Umlenkhebel. Die Zugstange, die an einem ersten Ende mit Zugfahrzeug koppelbar ist, kann an ihrem zweiten, dem ersten Ende gegenüberliegenden Ende mit dem Umlenkhebel zusammenwirken, um diesen auszulenken. Wird das Zugfahrzeug gebremst (oder bergab gefahren) läuft der Anhänger auf das Zugfahrzeug auf und die Zugstange wird entgegen der Vorwärts-Fahrtrichtung verschoben. Mit ihrem zweiten Ende lenkt die Zugstange sodann den Umlenkhebel aus. Der Umlenkhebel kann mit einer Bremse des Anhängers verbindbar sein. Beispielsweise kann die Verbindung über ein Bremsseil, ein Bremsgestänge, oder eine Bremsstange erfolgen. Die Bremse kann eine Trommelbremse, eine Scheibenbremse oder eine andere Bremse sein. Der Umlenkhebel ist also dazu eingerichtet, die Bremse zu betätigen, wenn der Umlenkhebel durch die Zugstange ausgelenkt wird.

Die Aufgabe wird weiterhin durch einen Anhänger, insbesondere einen Caravan Anhänger gelöst. Der Anhänger umfasst eine Auflaufeinrichtung, wie sie vorstehend beschrieben ist und zumindest eine Bremse, wobei die Auflaufeinrichtung dazu eingerichtet ist die Bremse des Anhängers zu betätigen, wenn die Zugstange relativ zum Lagergehäuse entgegen der Vorwärts-Fahrtrichtung verschoben wird.

Die Bremse kann eine Trommelbremse, eine Scheibenbremse und/oder dergleichen sein. Zudem kann der Anhänger mehrere Bremsen umfassen, die durch die Auflaufeinrichtung betätigbar sind. Der Anhänger kann ein PKW-Anhänger, ein landwirtschaftlicher Anhänger, oder ein Lkw Anhänger sein. Insbesondere kann der Anhänger ein Transportanhänger sein, der zum Transport von Materialien und/oder Tieren, insbesondere Pferden vorgesehen ist. Weiterhin kann der Anhänger ein Caravan-Anhänger oder ein Wohnwagen sein. Der Anhänger kann beispielsweise ein zulässiges Gesamtgewicht von maximal 3500 kg aufweisen.

### Kurze Beschreibung der Figuren

In den beigefügten Figuren ist sind spezifische Ausführungsformen der vorliegenden Erfindung dargestellt. Diese dienen dem Verständnis der Erfindung. Insbesondere zeigt
- Fig. 1: eine schematische Darstellung eines Anhängers und eines Zugfahrzeugs;
- Fig. 2: eine Prinzipskizze einer Auflaufeinrichtung;
- Fig. 3A: eine schematische Seitenansicht einer Auflaufeinrichtung;
- Fig. 3B: eine schematische Draufsicht einer Auflaufeinrichtung;
- Fig. 4: eine schematische isometrische Ansicht einer Auflaufeinrichtung;
- Fig. 5: eine weitere schematische Seitenansicht einer Auflaufeinrichtung;
- Fig. 6: eine schematische Schnittdarstellung einer Auflaufeinrichtung;
- Fig. 7: eine schematische Darstellung eines Lagergehäuses der Auflaufeinrichtung;
- Fig. 8: eine schematische Darstellung eines Sicherungselements, und
- Fig. 9: eine schematische Explosionsdarstellung einer Auflaufeinrichtung.

### Detaillierte Beschreibung der Figuren

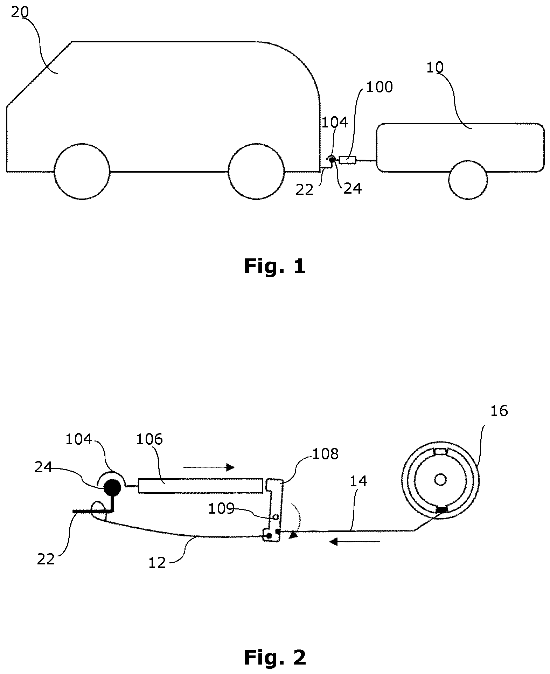

Figur 1 zeigt eine schematische Darstellung eines Anhängers 10 mit einem Zugfahrzeug 20. Der Anhänger 10 ist ein auflaufgebremster Anhänger mit einem maximal zulässigen Gesamtgewicht von beispielsweise 3500 kg.

Der Anhänger 10 umfasst eine Auflaufeinrichtung 100, welche eine Zugstange (hier nicht gezeigt) umfasst. An einem ersten Ende der Zugstange ist eine Kugelkupplung 104 vorgesehen, die mit einem Kugelkopf 24 eine Anhängerkupplung 22 gekoppelt ist.

In Figur 2 ist das Prinzip der Auflaufeinrichtung 100 dargestellt. Wird die Zugstange 106 der Auflaufeinrichtung 100 entgegen der Vorwärts-Fahrtrichtung verschoben (angedeutet durch einen Pfeil oberhalb der Zugstange 106) wird ein Umlenkhebel 108 ausgelenkt. Der Umlenkhebel 108 ist an einem Drehpunkt 109 drehbar gehalten. Die Drehbewegung des Umlenkhebels 108 wirkt auf ein Bremsgestänge 14 oder ein Bremsseil, das mit einer Bremse 16 des Anhängers (hier eine Bremstrommel) verbunden ist.

Die Bewegung der Zugstange 106 entgegen der Vorwärts-Fahrtrichtung führt mithin zu einer Bremsung des Anhängers 10. Zur Sicherheit ist ein Sicherungsseil 12 vorgesehen, das an einem ersten Ende mit dem Umlenkhebel 108 verbunden ist und mit einem zweiten Ende an der Anhängerkupplung 22 des Zugfahrzeugs befestigt ist. Würde sich der Anhänger 10 von der Anhängerkupplung 22 lösen oder die Zugstange brechen, würde das Sicherungsseil 12 die Verbindung zwischen Anhänger 10 und Zugfahrzeug 20 sicherstellen. In diesem Fall würde das Sicherungsseil 12 zudem den Umlenkhebel 108 auslenken und so eine Notbremsung des Anhängers 10 herbeiführen.

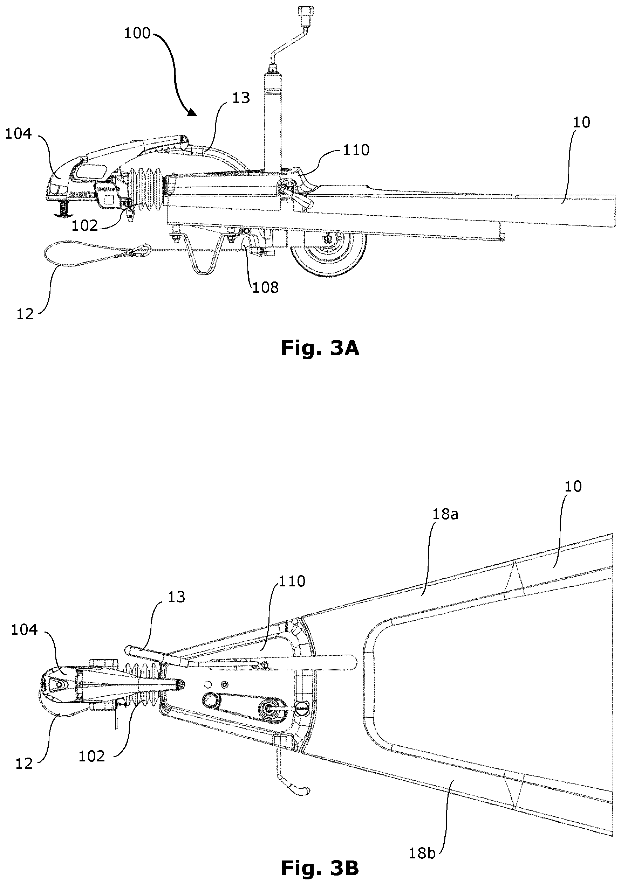

Die Figuren 3A und 3B zeigen eine Deichsel eines Anhängers 10, an welchem eine Auflaufeinrichtung 100 angeordnet ist. Figur 3A zeigt eine Seitenansicht und Figur 3B zeigt eine Draufsicht.

Der Anhänger 10 weist zwei Zugholme 18a, 18b auf. Ebenso kann auch nur ein Zugholm vorgesehen sein. An dem Zugholm/den Zugholmen 18a, 18b des Anhängers, ist eine Auflaufeinrichtung 100 befestigt. Die Auflaufeinrichtung umfasst ein Gehäuse, welches durch eine Abdeckung 110 zusätzlich abgedeckt ist.

An dem hier linken Ende des Anhängers 10 ist eine Kugelkupplung 104 angeordnet, die an einem ersten Ende der Zugstange befestigt ist. Die Zugstange ist hier nicht gezeigt, da sie durch einen Faltenbalg 102 verdeckt ist. Der Faltenbalg 102 verhindert, dass die Zugstange verschmutzt.

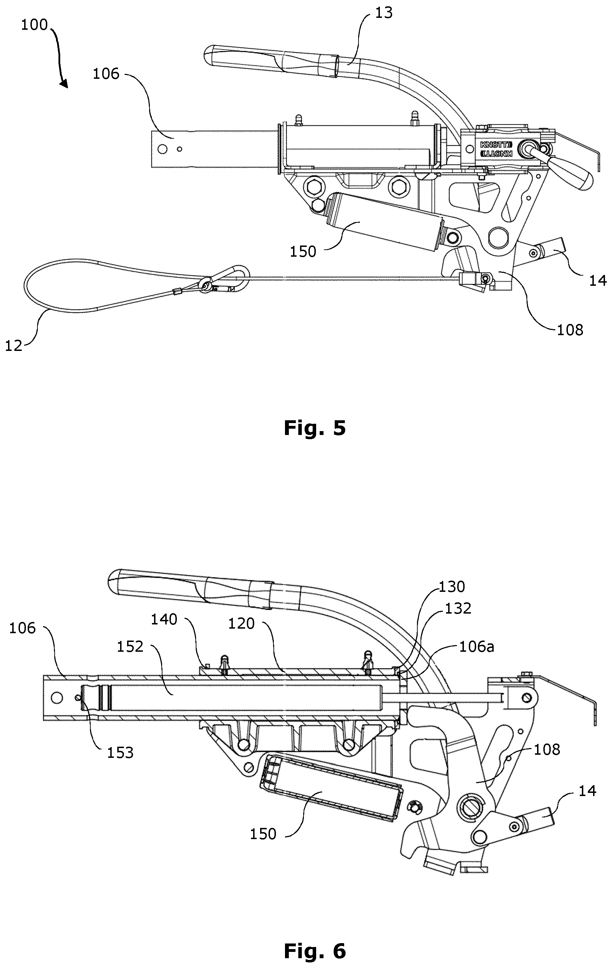

Die Zugstange 106 wirkt mit dem der Kugelkupplung 104 gegenüberliegenden Ende auf den Umlenkhebel 108 (wie insbesondere in der Schnittdarstellung, Fig. 6, gezeigt ist). Zudem ist an dem Umlenkhebel 108 ein Sicherungsseil 12 befestigt. Weiterhin kann die Bremse 16 des Anhängers 10 in dem gezeigten Ausführungsbeispiel durch einen Bremshebel 13 manuell festgestellt werden. Der Bremshebel 13 wirkt ebenfalls auf den Umlenkhebel 108 in an sich bekannter Weise.

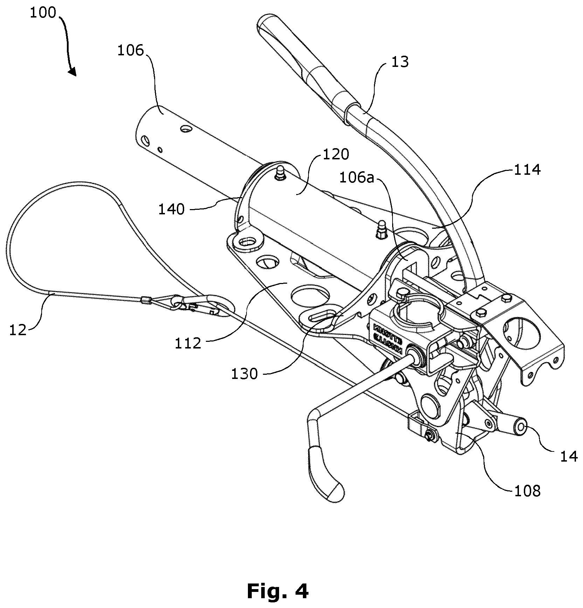

Figur 4 zeigt eine Auflaufeinrichtung 100 für den in Figur 1 dargestellten Anhänger. Die Auflaufeinrichtung 100 ist hier ohne die Abdeckhaube und ohne den Faltenbalg dargestellt.

Die Auflaufeinrichtung 100 umfasst eine Zugstange 106. Das erste Ende der Zugstange weist hier in die linke Richtung. Über die gezeigten Bohrungen kann eine Kugelkupplung 104 (hier nicht dargestellt) mit dem ersten Ende der Zugstange befestigt werden. Die Zugstange 106 ist in dem Lagergehäuse 120 verschiebbar gelagert.

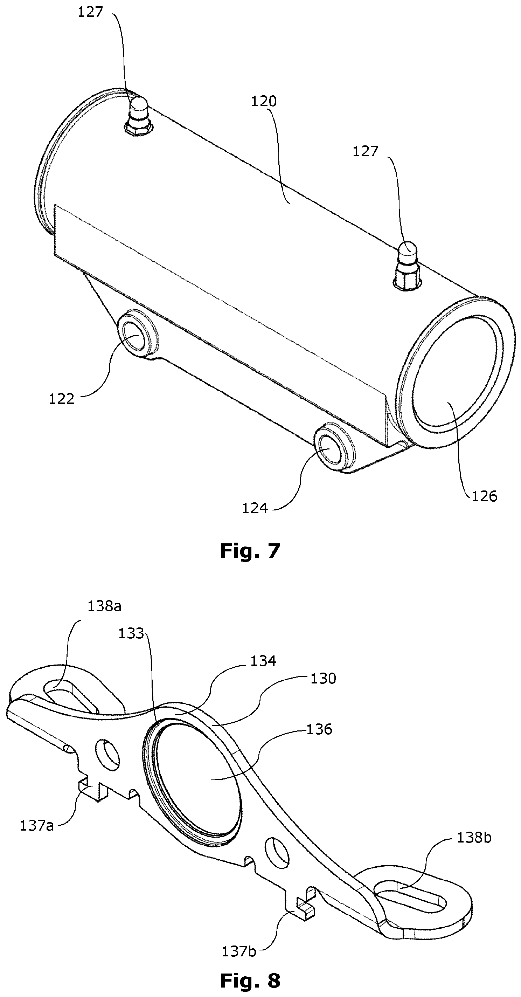

Zudem umfasst die Auflaufeinrichtung 100 ein Sicherungselement 130, welches die Zugstoßstange übergereift. Mit einem Flansch 106a, welcher an dem zweiten Ende der Zugstange 106 angeordnet ist, schlägt die Zugstange 106 an einem Anschlag 134 (s. Figur 8) des Sicherungselements 130 an, wenn die Zugstange 106 vollständig in Vorwärts-Fahrtrichtung ausgelenkt ist.

Der Anschlag 134 des Sicherungselements 130 verhindert, dass die Zugstange 106 in Vorwärts-Fahrtrichtung aus der Auflaufeinrichtung 100 ausgezogen werden kann. Da die Auflaufeinrichtung 100 fest mit dem Anhänger 10 verbunden ist, kann so eine Trennung von Anhänger 10 und Zugfahrzeug 20 verhindert werden, selbst wenn beispielsweise das Lagergehäuse 120 bricht.

Die gezeigte Konstruktion, insbesondere das Sicherungselement 130, welches mit dem Flansch 106a der Zugstange 106 zusammenwirkt, ermöglicht es, dass das Lagergehäuse 1220 aus einem anderen Material als Stahl gefertigt wird. Beispielsweise kann das Lagergehäuse 120 ein Leichtmetallgehäuse (beispielsweise Aluminium, Titan, Magnesium, oder dergleichen) sein. Ebenso kann das Lagergehäuse 120 ein Kunststoffgehäuse (beispielsweise ein PA, PE, PP, PET, PS, ...) sein. Zudem kann das Lagergehäuse 120 ein Verbundwerkstoff-Gehäuse sein und einen Verbundwerkstoff wie beispielsweise eine glas- oder kohlefaserverstärkten Kunststoff (GFK, CFK, ...) umfassen.

Das Sicherungselement 130 kann an den Gehäuseteilen 112, 114 des Gehäuses der Auflaufeinrichtung 100 befestigt werden. Durch die Befestigung des Sicherungselements 130 an den Gehäuseteilen 112, 114, können die Gehäuseteile 112, 114 zusätzlich stabilisiert werden, sodass höhere Biegelasten und/oder Drehmomente (insbesondere solche, die zu einer Verwindung führen) von den Gehäuseteilen 112, 114 aufgenommen werden können.

Die Zugstange 106 wirkt auf einen Umlenkhebel 108. Dieser Umlenkhebel 108 weist an seinem hier unteren Ende eine Befestigung für ein Bremsgestänge 14 auf. Das Bremsgestänge 14 wirkt sodann auf eine Bremse 16. Wird also der Umlenkhebel 108 ausgelenkt wird die Bremse 16 betätigt. Zudem ist an dem Umlenkhebel 108 ein Sicherungsseil 12 angeschlagen. Weiterhin umfasst die Ablaufeinrichtung 100 einen Bremshebel 13, mit welchem die Bremse 16 manuell festgestellt werden kann.

Die Auflaufeinrichtung 100 kann optional ein weiteres Sicherungselement 140 umfassen. Das weitere Sicherungselement 140 ist an einem ersten Ende des Lagergehäuses 120 angeordnet und dient u.a. der Befestigung des Lagergehäuses 120. Das Lagergehäuse 120 ist im Wesentlichen zwischen dem Sicherungselement 130 und dem weiteren Sicherungselement 140 angeordnet. Würde das erste Sicherungselement 130 und auch das Lagergehäuse 120 versagen, würde der Flansch 106a der Zugstange 106 gegen das Sicherungselement 140 geführt und dort festgehalten. Eine Trennung des Anhänger 10 vom Zugfahrzeug 20 könnte mithin vermieden werden.

Figur 5 zeigt die Auflaufeinrichtung 100 aus Figur 4 in einer Seitenansicht. Die Auflaufeinrichtung kann ein Feder- und Dämpfungselement 150 umfassen. Das Feder- und Dämpfungselement 150 ist an einem Gehäuseteil der Auflaufeinrichtung 100 sowie an dem Umlenkhebel 108 befestigt. Das Feder- und Dämpfungselement 150 dämpft eine Auslenkung des Umlenkhebels 108 und spannt ihn in eine Normalstellung, wie sie in Figur 5 gezeigt ist vor. In der Normalstellung bremst der Umlenkhebel 108 die Bremse 16 nicht.

In Figur 6 ist die Auflaufeinrichtung 100aus Figur 4 und 5 in einer Schnittdarstellung gezeigt. Innerhalb der Zugstange 160 kann ist ein weiteres Feder- und Dämpfungselement 152 vorgesehen sein. Das Feder- und Dämpfungselement 152 ist durch einen Querbolzen 153 in der Zugstange 106 gesichert. An dem gegenüberliegenden Ende ist das Feder- und Dämpfungselement 152 mit einem Gehäuseteil der Auflaufeinrichtung verbunden. Das weitere Feder- und Dämpfungselement 152 spannt die Zugstange in einer Normalstellung vor, d. h. in einer Stellung in der die Zugstange 106 in Vorwärts-Fahrtrichtung maximal ausgelenkt ist. Zudem dämpft das Feder- und Dämpfungselement 152 eine Bewegung der Zugstange 106 entgegen der Vorwärts-Fahrtrichtung.

Zwischen dem Flansch 106a der Zugstange 106 und dem Sicherungselement 130 ist ein Dämpfungselement 132 in Form eines elastischen Rings, beispielsweise eines Gummirings vorgesehen. Dieses Dämpfungselement 132 verhindert ein hartes Anschlagen des Flanschs 106a an dem Sicherungselement 130.

Figur 7 zeigt eine Darstellung des Lagergehäuses 120, welches ein Leichtmetallgehäuse, ein Kunststoffgehäuse oder ein Verbundwerkstoff-Gehäuse sein kann. Oberseitig sind an dem Gehäuse 120 Schmiernippel 127 angeordnet. Diese dienen dem Zuführen von Schmierstoff in das Lagergehäuse, um eine ordnungsgemäße Schmierung der Zugstange 106 zu gewährleisten.

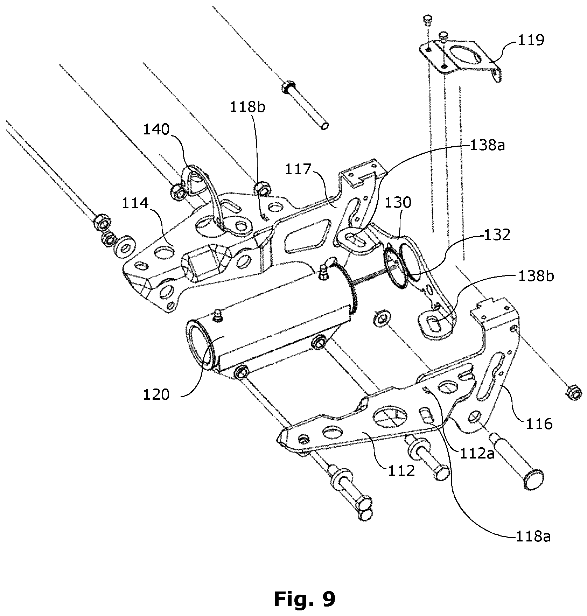

Die Zugstange 106 wird in die Zugstangeaufnahme 126 des Lagergehäuses 120 eingeführt und ist sodann im Lagergehäuse 120 verschiebbar gelagert. Zur Befestigung des Lagergehäuses 120 an der Auflaufeinrichtung 100 und/oder an einem Anhänger 10 weist das Lagergehäuse 120 zumindest zwei laterale Bohrungen 122,124 auf. Diese dienen der Aufnahme von Schrauben oder Gewindebolzen (s. Figur 9).

Figur 8 zeigt ein Sicherungselement 130. Zentral im Sicherungselement 130 ist eine Zugstangeaufnahme 136 angeordnet. Diese ist hier als Durchgangsöffnung ausgeführt, durch die die Zugstange hindurchgeführt wird. Der umlaufende Rand der Durchgangsöffnung umgreift die Zugstange vollständig. Zudem ist umlaufend um die Zugstangenaufnahme 136 eine Aufnahme 133 für das Dämpfungselement 132 vorgesehen. Dass Dämpfungselement 132, beispielsweise ein Gummiring kann in die Aufnahme 133 eingelegt werden.

Der umlaufende Rand der Zugstangenaufnahme 136 (Randbereich) bildet den Anschlag 134 für die Zugstange 106. Um an dem Anhänger 10 (mittelbar oder unmittelbar) befestigt zu werden, weist das Sicherungselement 130 Befestigungslaschen 138a, 138b auf, welche Durchgangsöffnungen (hier Langlöcher) umfassen. Durch diese Durchgangsöffnungen können beispielsweise Schrauben oder Nieten durchgeführt werden, um das Befestigungselement 130 mit dem Anhänger, insbesondere dem/den Zugholm(en) des Anhängers zu verbinden. Hierdurch werden die Zugholme durch das mit ihnen verbundene Sicherungselement 130 gegen verbiegen/verwinden zusätzlich gesichert.

Zudem weist das Sicherungselement 130 Rastelemente 137a, 137b auf. Die Rastelemente 137a, 137b erstrecken sich in eine laterale Richtung.

Wie in Figur 9 gezeigt ist, können auf die Rastelemente 137a, 137b die Gehäuseteile 112, 114 lateral aufgeschoben werden. Hierzu umfasst jedes der Gehäuseteile 112,114 ein komplementäres Rastelement 118a, 118b. Die komplementären Rastelemente 118a, 118b sind vorliegend als Aufnahmeöffnungen ausgeführt.

Um die Aufnahmeeinrichtung 100 zu montieren, werden Schrauben bzw. Gewindebolzen durch die Bohrungen 122, 124 des Lagergehäuses 120 geführt. Seitlich an dem Lagergehäuse 120 werden die Gehäuseteile 112, 114 mittels dieser Gewindebolzen befestigt. Durch das Zusammenziehen der Gehäuseteil 112, 114 werden die sich lateral erstreckenden Rastelemente 137a, 137b des Sicherungselements 130 in den Aufnahmeöffnungen 118a, 118b formschlüssig aufgenommen und gesichert. Durch die formschlüssige Verbindung mit dem Sicherungselement 130, insbesondere aufgrund der sich lateral erstreckenden Rastelemente 137a, 137b, können die Gehäuseteile 112, 114 höhere Biegelasten und/oder Drehmomente aufnehmen.

Zusätzlich kann das Sicherungselement 130 über die Befestigungslaschen 138a, 138b mit dem Anhänger 10 verschraubt oder vernietet werden. Dies führt zu einer weiteren Stabilisierung. Die weiteren Gehäuse Teile 116, 117 und 119 werden im gezeigten Ausführungsbeispiel ebenfalls mit den Gehäuseteilen 112, 114 verschraubt. An den Gehäuseteilen 116 und 117 kann der Umlenkhebel 108 befestigt werden. Das Gehäuseteil 119 dient zur Befestigung einer Abdeckhaube.

Einige der Ausführungsformen werden unter Bezugnahme auf die beigefügten Figuren ausführlicher beschrieben als andere. Andere Ausführungsformen sind jedoch ebenso in der vorliegenden Offenbarung enthalten. Die vorliegende Offenbarung sollte nicht so verstanden werden, dass sie nur auf die hier explizit dargelegten Ausführungsformen beschränkt ist; vielmehr werden diese Ausführungsformen als Beispiele angeführt, um dem Fachmann den Umfang des erfindungsgemäßen Gegenstandes zu vermitteln. Die vorliegende Erfindung kann natürlich auch auf andere Weise als die hierin dargelegte ausgeführt werden, ohne dass dadurch wesentliche Merkmale der Erfindung beeinträchtigt werden. Die vorliegenden Ausführungsformen sind in jeder Hinsicht als illustrativ und nicht einschränkend zu betrachten, sodass auch Abwandlungen der beschriebenen Ausführungsformen unter den Schutzbereich fallen können.

### Bezugszeichenliste

- 10: Anhänger
- 12: Sicherungsseil
- 13: Bremshebel
- 14: Bremsgestänge oder Bremsseil
- 16: Anhängerbremse (z.B. Bremstrommel)
- 18a: Zugholm
- 18b: Zugholm
- 20: Zugfahrzeug
- 22: Anhängerkupplung
- 24: Kugelkopf
- 100: Auflaufeinrichtung
- 102: Faltenbalg
- 104: Kugelkupplung
- 106: Zugstange
- 106a: Flanschabschnitt
- 108: Umlenkhebel
- 109: Drehpunkt
- 110: Abdeckung
- 112: Gehäuseteil
- 112a: komplementäres Rastelement
- 114: Gehäuseteil
- 114a: komplementäres Rastelement
- 116: Gehäuseteil
- 117: Gehäuseteil
- 118a: Aufnahmeöffnung
- 118b: Aufnahmeöffnung
- 119: Gehäuseteil
- 120: Lagergehäuse
- 122: Bohrung
- 124: Bohrung
- 126: Zugstangenaufnahme
- 127: Schmiernippel
- 130: Sicherungselement
- 132: Dämpfungselement
- 133: Aufnahme für Dämpfungselement
- 134: Anschlag (Randbereich)
- 136: Zugstangenaufnahme
- 137a: Rastelement
- 137b: Rastelement
- 138a: Befestigungslasche
- 138b: Befestigungslasche
- 140: Befestigungselement
- 150: Feder- und/oder Dämpfungselement
- 152: Feder- und/oder Dämpfungselement
- 153: Querbolzen

## Patentansprüche

1. Eine Auflaufeinrichtung (100) für einen Anhänger (10), wobei die Auflaufeinrichtung (100)
eine Zugstange (106), die ein erstes Ende aufweist und an dem ersten Ende mit einem Zugfahrzeug (20) koppelbar ist;
zumindest ein Sicherungselement (130), und
ein Lagergehäuse (120) umfasst, wobei das Lagergehäuse ein Leichtmetallgehäuse, ein Kunststoffgehäuse oder ein Verbundwerkstoffgehäuse ist, und wobei die Zugstange (106) in dem Lagergehäuse (120) translatorisch verschiebbar gelagert ist, und dazu eingerichtet ist, eine Bremse (16) des Anhängers (10) zu betätigen, wenn die Zugstange (106) relativ zum Lagergehäuse (120) entgegen der Vorwärts-Fahrtrichtung verschoben wird, und **dadurch gekennzeichnet dass**
das Sicherungselement (130) vom Lagergehäuse (120) verschieden ist und dazu eingerichtet ist fest mit dem Anhänger (10) verbunden zu werden, wobei das Sicherungselement (130) einen Anschlag (134) aufweist, welcher die Bewegung der Zugstange (106) relativ zum Lagergehäuse (120) in Vorwärts-Fahrtrichtung begrenzt.

2. Die Auflaufeinrichtung (100) nach Anspruch 1, wobei das Sicherungselement (130) und die Zugstange (106) aus Stahl oder im Wesentlichen aus Stahl bestehen.

3. Die Auflaufeinrichtung (100) nach Anspruch 1 oder 2, wobei
das Sicherungselement (130) eine Durchgangsöffnung umfasst, durch die die Zugstange hindurchgeführt ist, und/oder wobei
das Sicherungselement (130) einen Rücksprung umfasst, der die Zugstange jedenfalls teilweise umgreift, und/oder wobei das
das Sicherungselement (130) einen Vorsprung umfasst, der in die Zugstange (106) eingreift.

4. Die Auflaufeinrichtung (100) nach einem der Ansprüche 1 bis 3, wobei die Zugstange einen Flanschabschnitt (106a) aufweist, der dazu eingerichtet ist an dem Anschlag (134) des Sicherungselements (130) anzuschlagen, um die maximale Verschiebung der Zugstange (106) relativ zum Lagergehäuse (120) in Vorwärts-Fahrtrichtung zu begrenzen.

5. Die Auflaufeinrichtung (100) nach einem der Ansprüche 1 bis 4, wobei die Auflaufeinrichtung ein Gehäuse umfasst, wobei das Gehäuse dazu eingerichtet ist mit dem Anhänger, insbesondere zumindest einem Zugholm (18a, 18b) des Anhängers verbunden zu werden, und wobei
das Gehäuse weiterhin unmittelbar mit dem Sicherungselement verbunden ist.

6. Die Auflaufeinrichtung (100) nach einem der Ansprüche 1 bis 5, wobei das Sicherungselement (130) zumindest ein Rastelement (137a, 137b) umfasst, welches formschlüssig mit dem Anhänger und/oder mit einem Gehäuseteil (112, 114) des Gehäuses der Auflaufeinrichtung (100) zusammengreifen kann, wobei
das Gehäuseteil (112, 114) der Auflaufeinrichtung (100) ein komplementäres Rastelement aufweisen kann (112a, 114a), welches mit dem zumindest ein Rastelement (137a, 137b) zusammengreift.

7. Die Auflaufeinrichtung (100) nach Anspruch 6, wobei das zumindest eine Rastelement (137a, 137b) sich in eine laterale Richtung erstreckt und ein Gehäuseteil (112, 114) des Gehäuses der Auflaufeinrichtung (100) mit seinem komplementären Rastelement (112a, 114a) auf das Rastelement (137a, 137b) aufgeschoben ist, um das Sicherungselement (130) am Anhänger zu befestigen.

8. Die Auflaufeinrichtung (100) nach einem der Ansprüche 1 bis 7, wobei die Auflaufeinrichtung eine Abdeckung (110) umfasst, die das Lagergehäuse (120) und die Zugstange (106) jedenfalls teilweise abdeckt.

9. Die Auflaufeinrichtung (100) nach einem der Ansprüche 1 bis 8, wobei die Auflaufeinrichtung (100) ein Dämpfungselement (132) umfasst, welches zwischen dem Anschlag (134) und der Zugstange (106), insbesondere zwischen dem Anschlag (134) und dem Flanschabschnitt (106a) der Zugstange (106), angeordnet ist.

10. Die Auflaufeinrichtung (100) nach einem der Ansprüche 1 bis 9, wobei die Auflaufeinrichtung (100) ein weiteres Sicherungselement (140) umfasst, welches dazu eingerichtet ist fest mit dem Anhänger (10) verbunden zu werden, wobei das weitere Sicherungselement (140) dazu eingerichtet ist die Zugstange (106) am Anhänger (10) zu sichern, wenn das erste Sicherungselement (130) versagt.

11. Die Auflaufeinrichtung (100) nach einem der Ansprüche 1 bis 10, wobei das Lagergehäuse (120) ein erstes und ein zweites Ende aufweist, wobei das erste Ende in Vorwärts-Fahrrichtung weist und das zweite Ende dem ersten Ende in Erstreckungsrichtung der Zugstange gegenüberliegt, und wobei
das Sicherungselement (130) am zweiten Ende oder in der Nähe des zweiten Endes angeordnet ist und wobei
das optionale weitere Sicherungselement (140) am ersten Ende oder in der Nähe des ersten Endes angeordnet ist.

12. Die Auflaufeinrichtung (100) nach einem der Ansprüche 1 bis 11, wobei zwischen dem Lagergehäuse (120) und dem Sicherungselement (130) und optional zwischen dem Lagergehäuse (120) und dem weiteren Sicherungselement (140) ein Dichtungselement angeordnet ist.

13. Die Auflaufeinrichtung (100) nach einem der Ansprüche 1 bis 11, wobei
die Auflaufeinrichtung (100) einen Umlenkhebel (108) umfasst, und wobei die Zugstange (106) an einem zweiten, dem ersten Ende gegenüberliegenden Ende mit dem Umlenkhebel (108) zusammenwirkt um diesen auszulenken, wobei
der Umlenkhebel (108) mit einer Bremse (16) des Anhängers (10) verbindbar ist, und dazu eingerichtet ist, die Bremse (16) zu betätigen, wenn der Umlenkhebel (108) durch die Zugstange (106) ausgelenkt wird.

14. Anhänger (10), insbesondere ein Caravan-Anhänger, umfassend eine Auflaufeinrichtung (100) nach einem der Ansprüche 1 bis 13 und zumindest eine Bremse (16), wobei die Auflaufeinrichtung (100) dazu eingerichtet ist die Bremse (16) des Anhängers (10) zu betätigen, wenn die Zugstange (106) relativ zum Lagergehäuse (120) entgegen der Vorwärts-Fahrtrichtung verschoben wird.

15. Anhänger nach Anspruch 14, wobei der Anhänger ein zulässiges Gesamtgewicht von maximal 3500 kg aufweist.

## Claims

1. Overrun device (100) for a trailer (10), wherein the overrun device (100) comprises
a drawtube (106) which has a first end and can be coupled at the first end to a towing vehicle (20);
at least one securing element (130), and
a bearing housing (120), wherein the bearing housing is a light metal alloy housing, a plastic housing or a composite material housing, and wherein the drawtube (106) is translationally movably mounted in the bearing housing (120) and is designed to actuate a brake (16) of the trailer (10) when the drawtube (106) is moved relative to the bearing housing (120) counter to the forward direction of travel, and
**characterised in that**
the securing element (130) is different from the bearing housing (120) and is designed to be fixedly connected to the trailer (10), wherein the securing element (130) has a stop (134) that limits the movement of the drawtube (106) relative to the bearing housing (120) in the forward direction.

2. Overrun device (100) according to claim 1, wherein the securing element (130) and the drawtube (106) consist of steel or substantially of steel.

3. Overrun device (100) according to claim 1 or 2, wherein
the securing element (130) comprises a passage opening through which the drawtube is led, and/or wherein
the securing element (130) comprises a recess that at least partially encompasses the drawtube, and/or wherein
the securing element (130) has a projection that engages with the drawtube (106).

4. Overrun device (100) according to one of claims 1 to 3, wherein the drawtube has a flange portion (106a) which is designed to strike against the stop (134) of the securing element (130) in order to limit the maximum movement of the drawtube (106) relative to the bearing housing (120) in the forward direction of travel.

5. Overrun device (100) according to one of claims 1 to 4, wherein the overrun device comprises a housing, wherein the housing is designed to be connected to the trailer, in particular to at least one drawbar (18a, 18b) of the trailer, and wherein
the housing is furthermore directly connected to the securing element.

6. Overrun device (100) according to one of claims 1 to 5, wherein the securing element (130) comprises at least one snap-fit element (137a, 137b) which can interlockingly engage with the trailer and/or with the housing part (112, 114) of the housing of the trailer device (100), wherein
the housing part (112, 114) of the trailer device (100) can have a complementary snap-fit element (112a, 114a) that interlocks with the at least one snap-fit element (137a, 137b).

7. Overrun device (100) according to claim 6, wherein the at least one snap-fit element (137a, 137b) extends in a lateral direction, and a housing part (112, 114) of the housing of the trailer device (100) is slid with its complementary snap-fit element (112a, 114a) onto the snap-fit element (137a, 137b) in order to attach the securing element (130) to the trailer.

8. Overrun device (100) according to one of claims 1 to 7, wherein the overrun device comprises a cover (110) which at least partially covers the bearing housing (120) and the drawtube (106).

9. Overrun device (100) according to one of claims 1 to 8, wherein the overrun device (100) comprises an absorber element (132) which is arranged between the stop (134) and the drawtube (106), in particular between the stop (134) and the flange portion (106a) of the drawtube (106).

10. Overrun device (100) according to one of claims 1 to 9, wherein the overrun device (100) comprises a further securing element (140) that is designed to be fixedly connected to the trailer (10), wherein the further securing element (140) is designed to secure the drawtube (106) on the trailer (10) if the first securing element (130) fails.

11. Overrun device (100) according to one of claims 1 to 10, wherein the bearing housing (120) has a first and a second end, wherein the first end points in the forward direction of travel and the second end is opposite the first end in the direction of extension of the drawtube, and wherein
the securing element (130) is arranged on the second end or near the second end, and wherein
the optional further securing element (140) is arranged on the first end or near the first end.

12. Overrun device (100) according to one of claims 1 to 11, wherein a sealing element is arranged between the bearing housing (120) and the securing element (130) and optionally between the bearing housing (120) and the further securing element (140).

13. Overrun device (100) according to one of claims 1 to 11, wherein
the overrun device (100) comprises a deflection lever (108), and wherein, at a second end opposite the first end, the drawtube (106) interacts with the deflection lever (108) to deflect the latter, wherein
the deflection lever (108) can be connected to a brake (16) of the trailer (10) and is designed to actuate the brake (16) when the deflection lever (108) is deflected by the drawtube (106).

14. Trailer (10), in particular a caravan trailer, comprising an overrun device (100) according to one of claims 1 to 13 and at least one brake (16), wherein the overrun device (100) is designed to actuate the brake (16) of the trailer (10) when the drawtube (106) is moved relative to the bearing housing (120) counter to the forward direction of travel.

15. Trailer according to claim 14, wherein the trailer has a maximum authorised mass of 3500 kg.

## Revendications

1. Dispositif de freinage à inertie (100) pour une remorque (10), le dispositif de freinage à inertie (100) comprenant :
une barre de traction (106) dont une première extrémité lui permet d'être raccordée à un véhicule tracteur (20),
au moins un élément de fixation (130), et
un fût (120), ledit fût étant un boîtier en métal léger, un boîtier en plastique ou un boîtier en matériau composite, ladite barre de traction (106) étant montée mobile en translation dans ledit fût (120) et étant conçue pour actionner un frein (16) de la remorque (10) lorsque la barre de traction (106) se déplace par rapport au fût (120) dans le sens contraire de la marche avant ; et
**caractérisé en ce que**
l'élément de fixation (130) est différent du fût (120) et est conçu pour être raccordé solidaire à la remorque (10), l'élément de fixation (130) comportant une butée (134) qui limite le mouvement de la barre de traction (106) par rapport au fût (120) dans le sens de la marche avant.

2. Dispositif de freinage à inertie (100) selon la revendication 1, dans lequel l'élément de fixation (130) et la barre de traction (106) se composent d'acier ou sont sensiblement constitués d'acier.

3. Dispositif de freinage à inertie (100) selon la revendication 1 ou 2, dans lequel
l'élément de fixation (130) comprend une ouverture traversante à travers laquelle passe la barre de traction, et/ou
l'élément de fixation (130) comprend une partie en retrait qui entoure dans tous les cas partiellement la barre de traction, et/ou
l'élément de fixation (130) comprend une partie en saillie qui pénètre dans la barre de traction (106).

4. Dispositif de freinage à inertie (100) selon l'une des revendications 1 à 3, dans lequel la barre de traction présente une partie de bride (106a) qui est conçue pour venir en butée contre la butée (134) de l'élément de fixation (130) afin de limiter le déplacement maximal de la barre de traction (106) par rapport au fût (120) dans le sens de la marche avant.

5. Dispositif de freinage à inertie (100) selon l'une des revendications 1 à 4, comprenant un boîtier, lequel boîtier est conçu pour être raccordé à la remorque, notamment à au moins un timon (18a, 18b) de la remorque,
ledit boîtier étant en outre raccordé directement à l'élément de fixation.

6. Dispositif de freinage à inertie (100) selon l'une des revendications 1 à 5, dans lequel l'élément de fixation (130) comprend au moins un élément de verrouillage (137a, 137b) pouvant venir en prise par complémentarité de forme avec la remorque et/ou avec une partie (112, 114) du boîtier du dispositif de freinage à inertie (100),
ladite partie (112, 114) du boîtier du dispositif de freinage à inertie (100) pouvant présenter un élément de verrouillage complémentaire (112a, 114a) qui vient en prise avec l'au moins un élément de verrouillage (137a, 137b).

7. Dispositif de freinage à inertie (100) selon la revendication 6, dans lequel l'au moins un élément de verrouillage (137a, 137b) s'étend dans une direction latérale et une partie (112, 114) du boîtier du dispositif de freinage à inertie (100) est enfichée, par son élément de verrouillage complémentaire (112a, 114a), sur l'élément de verrouillage (137a, 137b) pour fixer l'élément de fixation (130) à la remorque.

8. Dispositif de freinage à inertie (100) selon l'une des revendications 1 à 7, comprenant un couvercle (110) qui recouvre au moins partiellement le fût (120) et la barre de traction (106).

9. Dispositif de freinage à inertie (100) selon l'une des revendications 1 à 8, dans lequel le dispositif de freinage à inertie (100) comprend un élément d'amortissement (132) qui est disposé entre la butée (134) et la barre de traction (106), notamment entre la butée (134) et la section de bride (106a) de la barre de traction (106).

10. Dispositif de freinage à inertie (100) selon l'une des revendications 1 à 9, ledit dispositif de freinage à inertie (100) comprenant un élément de fixation supplémentaire (140) conçu pour être raccordé solidaire à la remorque (10), ledit élément de fixation supplémentaire (140) étant conçu pour fixer la barre de traction (106) à la remorque (10) en cas de défaillance du premier élément de fixation (130).

11. Dispositif de freinage à inertie (100) selon l'une des revendications 1 à 10, dans lequel le fût (120) présente une première et une deuxième extrémité, la première extrémité étant orientée dans le sens de la marche avant et la deuxième extrémité étant opposée à la première extrémité dans le sens de l'étendue de la barre de traction ;
l'élément de fixation (130) étant disposé au niveau de la deuxième extrémité ou à proximité de la deuxième extrémité, et
l'élément de fixation supplémentaire (140) éventuel est disposé au niveau de la première extrémité ou à proximité de la première extrémité.

12. Dispositif de freinage à inertie (100) selon l'une des revendications 1 à 11, dans lequel un élément d'étanchéité est disposé entre le fût (120) et l'élément de fixation (130) et éventuellement entre le fût (120) et l'élément de fixation supplémentaire (140).

13. Dispositif de freinage à inertie (100) selon l'une des revendications 1 à 11, dans lequel
le dispositif de freinage à inertie (100) comprend un levier de commande (108), ladite barre de traction (106) coopérant avec le levier de commande (108) au niveau d'une deuxième extrémité opposée à la première extrémité afin de le dévier ;
ledit levier de commande (108) pouvant être raccordé à un frein (16) de la remorque (10) et étant conçu pour actionner le frein (16) lorsque le levier de commande (108) est dévié par la barre de traction (106).

14. Remorque (10), notamment caravane, comprenant un dispositif de freinage à inertie (100) selon l'une des revendications 1 à 13 et au moins un frein (16), ledit dispositif de freinage à inertie (100) étant conçu pour actionner le frein (16) de la remorque (10) lorsque la barre de traction (106) est déplacée par rapport au fût (120) dans le sens contraire de la marche avant.

15. Remorque selon la revendication 14, ladite remorque ayant un poids total autorisé en charge de 3500 kg.
